# Europäisches Patentamt
## European Patent Office
## Office européen des brevets

(19)

(11) Veröffentlichungsnummer: **0 212 179**
**B1**

(12) **EUROPÄISCHE PATENTSCHRIFT**

(45) Veröffentlichungstag der Patentschrift:
**07.06.89**

(51) Int. Cl.⁴: **C 12 C   7/14**

(21) Anmeldenummer: **86109155.1**

(22) Anmeldetag: **04.07.86**

(54) **Aufhackvorrichtung in Läuterbottichen zur Würzegewinnung bei der Biererzeugung.**

(30) Priorität: **09.08.85 DE 3528647**

(43) Veröffentlichungstag der Anmeldung:
**04.03.87 Patentblatt 87/10**

(45) Bekanntmachung des Hinweises auf die Patenterteilung: **07.06.89 Patentblatt 89/23**

(84) Benannte Vertragsstaaten:
**BE FR GB**

(56) Entgegenhaltungen:
**DE—A— 1 642 732**
**DE—A— 2.523 369**
**US—A— 2 490 384**

(73) Patentinhaber: **Lenz, Bernhard**
**Schwarzacherstrasse 51a**
**D-8710 Kitzingen (DE)**

**Lenz, August**
**Am Eselsberg 7a**
**D-8710 Kitzingen (DE)**

(72) Erfinder: **Lenz, Bernhard**
**Schwarzacherstrasse 51a**
**D-8710 Kitzingen (DE)**
Erfinder: **Lenz, August**
**Am Eselsberg 7a**
**D-8710 Kitzingen (DE)**

(74) Vertreter: **Fuchs, Richard**
**Kantstrasse 18**
**D-8700 Würzburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 212 179 B1

## Beschreibung

Die Erfindung bezieht sich auf eine Aufhackvorrichtung in Läuterbottichen zur Würzegewinnung bei der Biererzeugung mit an einer stehend angeordneten, motorisch angetriebenen Welle waagrecht befestigten Armen, die jeweils eine Reihe von Aufhackmessern tragen, an deren unteren Enden Aufhackschuhe befestigt sind, um den sich beim Abläutervorgang auf dem Sieb- oder Filterboden des Läuterbottichs ausbildenden Treberkuchen entlang unterschiedlicher Kreisbahnen aufzulockern.

Während eines Abläutervorgangs zur Würzegewinnung für die Bierherstellung verdichtet sich der Treberkuchen über dem Sieb- oder Filterboden des Läuterbottichs, so daß zur weiteren Würzegewinnung ein erneutes bzw. wiederholtes Auflockern der Trebern notwendig wird. Dies erreicht man mit einer im Läuterbottich eingebauten Aufhackvorrichtung, welche an einer senkrecht stehenden, motorisch angetriebenen Welle mehrere waagrechte Arme aufweist, die jeweils eine Reihe von nach unten ragenden Aufhackmessern tragen. Dabei ist es bekannt, am unteren Ende eines jeden Aufhackmessers einen pflugartigen Aufhackschuh zu befestigen, und zwar auf einem solchen Niveau, daß diese Aufhackschuhe bei rotierender Aufhackvorrichtung ca. 5-10 mm über dem Sieb- oder Filterboden laufen und den verdichteten Treberkuchen entlang kreisförmiger Bahnen aufbrechen bzw. auflockern. Um diesen Auflockerungseffekt zu verbessern, ist es auch bereits bekannt, die Aufhackmesser von Arm zu Arm radial versetzt so anzuordnen, daß sie zusätzliche Schnittkreise mit unterschiedlichen Radien erzeugen. Gleichwohl muß bisher zur Erzielung einer optimalen Auflockerung der Treberschicht die Aufhackvorrichtung mehrmals umlaufen. Da die Umlaufgeschwindigkeit der Aufhackvorrichtung nur 3-5 m pro Minute beträgt, wird hierfür entsprechend viel Zeit beansprucht. Um diesen Nachteil zu vermeiden, d. h. mit weniger Umdrehungen auszukommen, hat man auch bereits die Anzahl der die Aufhackmesser tragende Arme auf bis zu sechs erweitert. Dieser bauliche Mehraufwand verteuert jedoch die Anlage und es besteht dabei die Gefahr, daß aufgrund der großen Zahl von Aufhackmessern beim Umlauf der Aufhackvorrichtung ein « Schieben » der Treberschicht auftritt, mit der Folge einer Beeinträchtigung oder gar Zerstörung der Filterfunktion dieser Schicht. Die dann noch erzeugte Würze weist eine höchst unerwünschte Trübung auf. Dieser Nachteil kann auch bei Aufhackvorrichtungen auftreten, deren Aufhackmesser an ihren unteren Enden radial verlaufende Aufhackleisten tragen.

Der Erfindung liegt die Aufgabe zugrunde, die obigen Nachteile zu vermeiden und eine Aufhackvorrichtung zu schaffen, welche eine verstärkte Auflockerung der Treberschicht bewirkt und hierfür relativ wenig Zeit, d. h. wenig Umläufe bei minimalem baulichen Aufwand benötigt. Insbesondere soll die Zahl der Aufhackmesser auf einer solchen Größe gehalten werden, daß ein « Verschieben » der Treberschicht bzw. einer Zerstörung von deren Filterfunktion zuverlässig vermieden ist.

Gemäß der Erfindung wird obige Aufgabe dadurch gelöst, daß am unteren Ende eines jeden Aufhackmessers wenigstens zwei Aufhackschuhe seitlich nebeneinander oder in Umlaufrichtung hintereinander angeordnet sind, so daß eine verstärkte Auflockerung des Treberkuchens durch die auf unterschiedlichen Kreisbahnen oder gleicher Kreisbahn umlaufenden Aufhackschuhe eines jeden Messers erzeugt wird. Der bauliche Mehraufwand für die zusätzlich erforderlichen Aufhackschuhe ist minimal, der Zeitgewinn beim Auflockerungsprozess des verdichteten Treberkuchens über dem Sieb- oder Filterboden dagegen beträchtlich. Da erfindungsgemäß ein jedes Aufhackmesser mehrere Aufhackschuhe trägt, braucht zur Erzielung des erwünschten Auflockerungseffekts die Aufhackvorrichtung in vorteilhafter Weise nicht oft umlaufen. Es können sogar Fälle auftreten, wo man bereits mit einer oder einer halben Umdrehung auskommt. Von Bedeutung ist ferner, daß man aufgrund der Erfindung nur die « übliche », d. h. relativ geringe Anzahl von Aufhackmessern benötigt, was wiederum Baukosten spart. Durch den mit Hilfe der Erfindung erzielbaren Zeitgewinn beim Auflockerungsprozess wird man auch den neuzeitlichen Anforderungen an die Betriebsweise von Läuterbottichen gerecht. Diese tentieren dahin, daß man von im Durchschnitt acht Sude auf zehn Sude pro 24 Stunden kommt.

Weitere Ausgestaltungen der Erfindung gehen aus den Unteransprüchen hervor. So können die Aufhackschuhe an jedem Messer auf gleicher oder auch auf unterschiedlicher Höhe angeordnet bzw. befestigt sein.

Eine weitere Ausgestaltung der Erfindung ist dadurch gekennzeichnet, daß am unteren Ende bzw. an einem unteren Teil der Aufhackmesser mindestens ein als Zusatz-Aufhackmesser ausgebildeter Arm befestigt ist, der wenigstens einen Aufhackschuh trägt. Dieser Arm erfüllt vorteilhaft eine Doppelfunktion, indem er einerseits wenigstens einen zusätzlichen Aufhackschuh trägt und andererseits die Schnittleistung des Haupt-Aufhackmessers verstärkt.

Wenn nach noch einer anderen Ausgestaltung der Erfindung der als Zusatz-Aufhackmesser ausgebildete Arm am hinteren (nachlaufenden) Rand des Aufhackmessers innerhalb von dessen Materialstärke befestigt ist, verhindert man vorteilhaft an der Verbindungsstelle überstehende Teile, die beim Umlauf der Vorrichtung ein unerwünschtes Schieben der Treberschicht in Teilbereichen bewirken könnten.

Wenn die Vorrichtung Aufhackmesser aufweist, die in bekannter Weise einen gewellten Abschnitt enthalten, ist es aus fertigungstechnischen Gründen zweckmäßig, daß der gewellte Messerabschnitt einen vertikalen Abschnitt enthält, an dessen hinteren (nachlaufenden) Rand das Zusatz-Aufhackmesser nach unten verlaufend befestigt ist, welches an seinem freien Ende mindestens einen Aufhackschuh trägt. Die Befestigung des Zusatz-Aufhackmessers am Haupt-Aufhackmesser wird dadurch merklich vereinfacht und das Zusatz-Aufhackmesser kann aus einem einfachen Stück Flachmaterial bestehen.

Noch eine andere Ausgestaltung der Erfindung ist dadurch gekennzeichnet, daß das Zusatz-Aufhackmesser an einem schrägen unteren Endabschnitt des Aufhackmessers in entgegengesetzter Richtung zu diesem seitlich abstehend befestigt ist.

Eine besonders kostensparende Konstruktion ergibt sich nach noch einer anderen Weiterbildung der Erfindung dadurch, daß die Aufhackschuhe am unteren Ende eines jeden Aufhackmessers und/oder Zusatz-Aufhackmessers seitlich unmittelbar aneinander angeschlossen sind.

Noch eine andere Ausgestaltung der Erfindung ist dadurch gekennzeichnet, daß an einem senkrechten Endabschnitt des Aufhackmessers ein Arm waagrecht befestigt ist, der mehrere Aufhackschuhe trägt.

Wenn die Aufhackschuhe nicht seitlich nebeneinander, sondern in Umlaufrichtung hintereinander am unteren Ende der Aufhackmesser angeordnet sind, wird vorzugsweise der Abstand zwischen diesen Aufhackschuhen unter Berücksichtigung der Umlaufgeschwindigkeit der Aufhackvorrichtung so gewählt, daß sich die durch den vorlaufenden Aufhackschuh aufgebrochene Treberschicht vor dem nachlaufenden Aufhackschuh wieder ganz oder wenigstens teilweise abgesetzt hat.

Die Erfindung wird anschließend anhand der Zeichnungen von Ausführungsbeispielen erläutert. Es zeigen :

Figur 1 einen schematischen Vertikalschnitt vom unteren Teil eines Läuterbottichs mit eingebauter Aufhackvorrichtung, deren Aufhackmesser je zwei Aufhackschuhe tragen ;

Figur 2 eine vergrößerte Vorderansicht von einem Aufhackmesser der in Fig. 1 gezeigten Aufhackvorrichtung ;

Figur 3 eine Seitenansicht des in Fig, 2 gezeigten Aufhackmessers ;

Figur 4 eine Draufsicht des in den Figuren 2 und 3 gezeigten Aufhackmessers, jedoch ohne den tragenden Arm ;

Figur 5 je eine Seitenansicht, Rückansicht und Draufsicht eines Aufhackschuhs, wie er in den Figuren 1-4 und 6-13 verkleinert gezeigt ist ;

Figur 6 eine Vorderansicht eines Aufhackmessers, das an seinem unteren Ende zwei Aufhackschuhe an einem horizontalen Arm trägt ;

Figur 7 eine Schnittansicht entlang der Linie VII-VII in Figur 6 ;

Figur 8 eine Vorderansicht eines anderen geradlinigen Aufhackmessers, welches an seinem unteren Ende drei Aufhackschuhe aufweist ;

Figur 9 eine Schnittansicht entlang der Linie IX-IX in Figur 8 ;

Figur 10 eine Vorderansicht eines weiteren Aufhackmessers mit zwei Aufhackschuhen ;

Figur 11 eine Schnittansicht entlang der Linie XI-XI in Figur 10 ;

Figur 12 eine Vorderansicht von noch einem weiteren geradlinigen Aufhackmesser, das an seinem unteren Ende drei seitlich aneinander befestigte Aufhackschuhe trägt und

Figur 13 eine Schnittansicht entlang der Linie XIII-XIII in Figur 12.

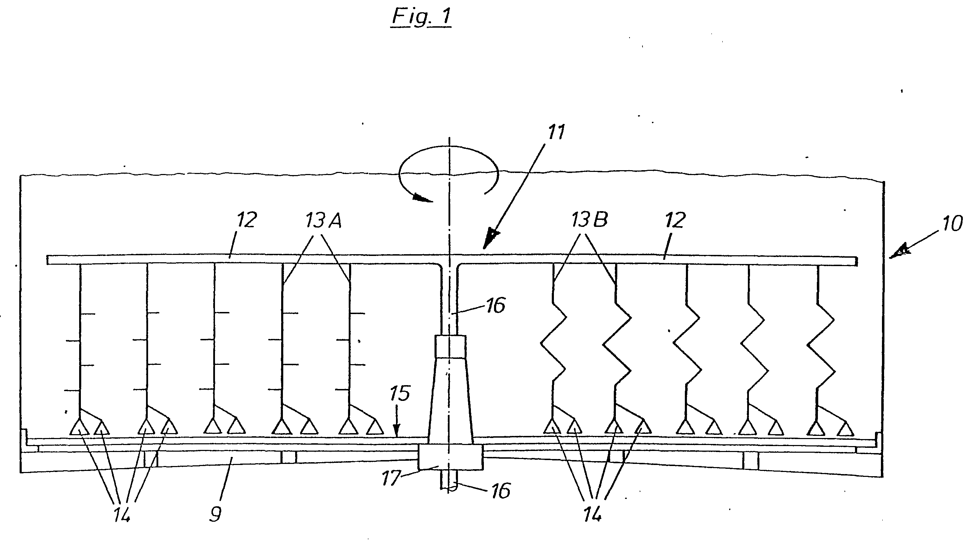

Der Läuterbottich 10, von dem in Figur 1 im Schnitt nur der untere Teil gezeigt ist, hat einen kreisrunden Grundriß und dient der Würzegewinnung bei der Bierherstellung. Die zu diesem Zweck in den Läuterbottich 10 eingebrachte Maische wird durch eine rotierende Aufhackvorrichtung 11 gleichmäßig eingelagert. Die Aufhackvorrichtung 11 weist, je nach Größe des Läuterbottichs 10, z. B. zwei, drei oder noch mehr horizontale Arme 12 auf, an denen in gleichem gegenseitigen Abstand mehrere, sich nach unten erstreckende Aufhackmesser 13 A, 13 B befestigt sind, die im Ausführungsbeispiel links in geradliniger 13 A und rechts in gewellter Ausführung 13 B gezeigt sind. Diese Aufhackmesser 13 A, 13 B tragen an ihren unteren Enden pflugartige Aufhackschuhe 14, welche beim Umlauf der Aufhackvorrichtung 11 dicht (im Abstand von ca. 5-10 mm) über den Sieb- oder Filterboden 15 des Läuterbottichs 10 streichen und das Auflockern bzw. Aufhacken der Treberschicht bewirken, die sich beim Abläutern nach einer gewissen Zeit auf dem Filterboden 15 ausbildet. Unter dem Sieb- oder Filterboden 15 ist ein Sammelraum 9 für die Würze angeordnet, die durch den Sieb- oder Filterboden 15 hindurchströmt. Die horizontalen Arme 12 der Aufhackvorrichtung 11 sind an einer Antriebswelle 16 befestigt, die in einem zentralen Lagerteil 17 lotrecht gelagert ist und sich nach unten zu einer nicht gezeigten Getriebemotoreinrichtung erstreckt. Das Lagerteil 17 ist an der Bodenkonstruktion des Läuterbottichs 10 abgestützt.

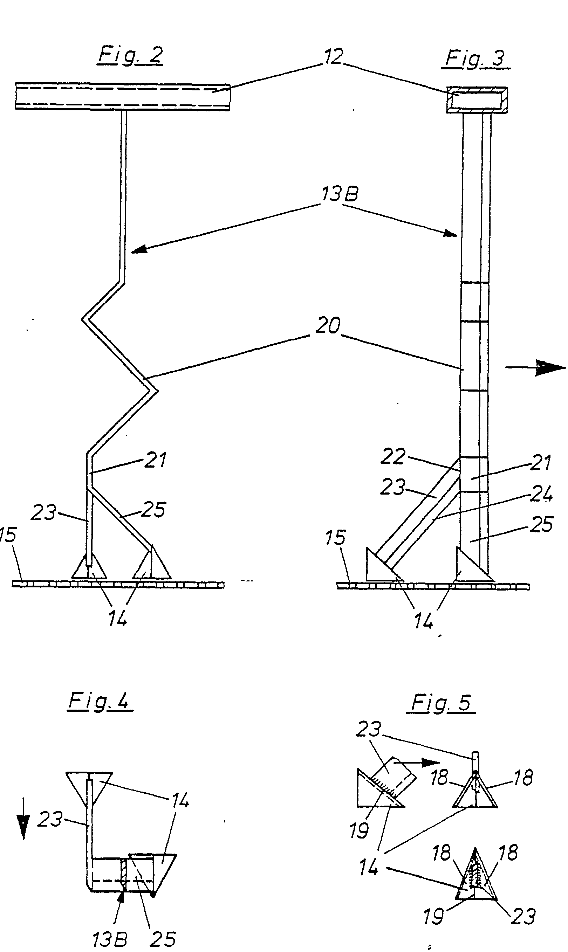

Um eine verstärkte Auflockerung des sich im Laufe eines Abläutervorgangs auf dem Sieb- oder Filterboden 15 absetzenden Treberkuchens zu erreichen, sind am unteren Ende eines jeden Aufhackmessers 13 A und 13 B wenigstens zwei gleichartige Aufhackschuhe 14 vorgesehen. Ein solcher Aufhackschuh 14 ist in Fig. 5 detailliert abgebildet. Jeder Aufhackschuh 14 der Vorrichtung 11 besteht aus einem vorzugsweise aus Edelstahlblech hergestellten Hohlkörper mit dreieckigem Grundriß, welcher nach unten und hinten offen und nach oben durch zwei spitzdachförmig angeordnete Wände 18 abgeschlossen ist, deren Verbindungslinie 19 (Scheitellinie) von der Basis des Aufhackschuhs 14 nach hinten schräg ansteigt. Die Aufhackschuhe 14 haben dadurch ein pflugartiges Aussehen und bewirken beim Umlauf der Aufhackvorrichtung 11 die schon erwähnte Auflockerung des Treberkuchens. Die Bewegungsrichtung der Aufhackmesser bzw. Aufhackschuhe ist in den Figuren 3, 4, 5, 7, 9, 11 und 13 durch je einen Pfeil angedeutet.

Es wird nun auf die Figuren 2-4 Bezug genommen. Das Aufhackmesser 13 B weist einen gewellten oder zickzackförmigen Abschnitt 20 auf, der im unteren Bereich einen vertikalen Abschnitt 21 enthält. Am hinteren (nachlaufenden) Rand 22 dieses vertikalen Messerabschnitts 21 ist innerhalb von dessen Materialstärke ein Arm 23 angeschweißt, der sich nach hinten, d. h. also entgegengesetzt zur Bewegungsrichtung des Aufhackmessers 13 B und nach unten erstreckt. Dieser Arm 23 ist als Zusatz-Aufhackmesser ausgebildet, was bedeutet, daß sein vorderer (vorlaufender) Rand 24 zugespitzt ist, was auch für den vorderen Rand des Aufhackmessers 13 B über dessen Gesamthöhe gilt. An den unteren Enden des Arms 23 und des Aufhackmessers 13 B sind auf gleicher Höhe Aufhackschuhe 14 angeschweißt. Im einzelnen ist der Arm 23 mit seinem unteren Ende durch entsprechende Schweißnähte an der Scheitellinie 19 des einen Aufhackschuhes 14 befestigt. Der zweite Aufhackschuh 14 ist an einem abgeschrägten unteren Ende eines schrägen Abschnitts 25 des Aufhackmessers 13 B angeschweißt. Die Befestigungsanordnung der Aufhackschuhe 14 entsprechend den Figuren 2-5 wird bevorzugt, da sie fertigungstechnisch besonders einfach ist. Außerdem fluchtet der Arm 23 an seiner Verbindungsstelle genau mit dem Aufhackmesser 13 B, d. h., daß jeglicher seitliche Überstand vermieden ist. Wie aus den Figuren 2 und 4 hervorgeht, laufen die Aufhackschuhe 14 bei Drehung der Aufhackvorrichtung 11 auf unterschiedlichen Kreisbahnen, wobei der Arm 23 eine zusätzliche Schneidfunktion übernimmt.

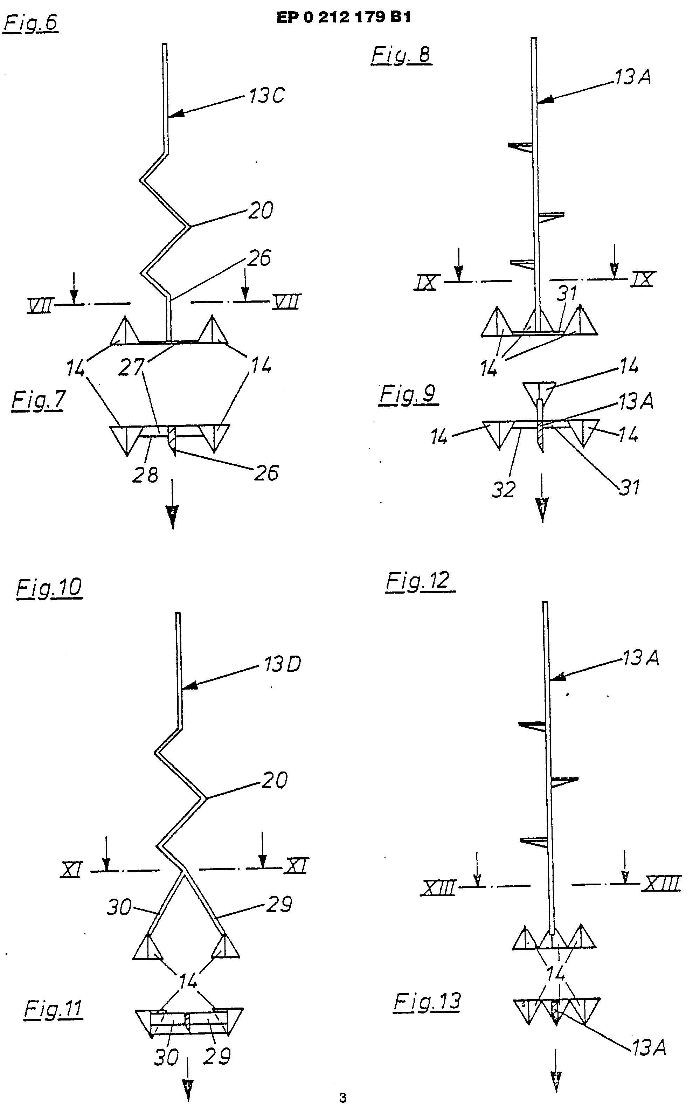

Beim Ausführungsbeispiel nach Figur 6 schließt sich an dem gewellten oder zickzackförmigen Abschnitt 20 des Aufhackmessers 13 C ein vertikaler Abschnitt 26 nach unten an, an dessen unteren Ende ein Arm 27 in horizontaler Lage angeschweißt ist. An den freien Enden dieses Armes 27 sind auf gleicher Höhe Aufhackschuhe 14 angeschweißt. Auch dieser Arm 27 kann als Zusatz-Aufhackmesser ausgebildet sein, also einen angespitzten vorderen Rand 28 enthalten.

Beim Ausführungsbeispiel nach Figur 10 ist an einem schrägen unteren Endabschnitt 29 des gewellten oder zickzackförmigen Messerabschnitts 20 des Aufhackmessers 13 D ein gleichfalls als Zusatz-Aufhackmesser ausgebildeter Arm 30 schräg abstehend angeschweißt. An den unteren Enden des Arms 30 bzw. Endabschnitten 29 des Aufhackmessers 13 D sind auf gleicher Höhe Aufhackschuhe 14 durch Schweißung befestigt. Wie beim Ausführungsbeispiel nach den Figuren 2-4 erzeugen auch bei den Ausführungsformen nach den Fig. 6 und 10 die Aufhackschuhe 14 an jedem Aufhackmesser 13 C bzw. 13 D in dem nicht gezeigten Treberkuchen auf dem Filterboden 15 Schnittkreise mit unterschiedlichen Radien.

In den Figuren 8 und 12 ist jeweils ein sich von dem nicht gezeigten tragenden Arm geradlinig nach unten erstreckendes Aufhackmesser 13 A gezeigt, die den Messern in Figur 1 links entsprechen, jedoch im Gegensatz zu diesen andere Aufhackschuhanordnungen an ihren unteren Enden aufweisen. So ist z. B. am unteren Ende des Aufhackmessers 13 A in Fig. 8 hinten ein Aufhackschuh 14 angeschweißt und mittig ein horizontaler Arm 31, der an seinen freien Enden zwei weitere angeschweißte Aufhackschuhe 14 trägt. Wie Figur 8 zeigt, befinden sich alle drei Aufhackschuhe 14 auf gleicher Höhe. Auch in diesem Fall ist der Arm 31 als Zusatz-Aufhackmesser ausgebildet und enthält demzufolge einen angespitzten vorderen Rand 32.

Beim Ausführungsbeispiel nach den Figuren 12 und 13 sind drei Aufhackschuhe 14 seitlich nebeneinander auf gleicher Höhe durch Schweißung miteinander verbunden, wobei der mittlere Aufhackschuh 14 am unteren Ende des Aufhackmessers 13 A durch Schweißung befestigt ist. Während bei der Ausführungsform nach den Figuren 8 und 9 die drei Aufhackschuhe 14 im Treberkuchen auf dem Filterboden 15 getrennte Schnittkreise mit entsprechend unterschiedlichen Radien erzeugen, lockern die drei Aufhackschuhe 14 gemäß den Figuren 12 und 13 den Treberkuchen entlang einer einzigen, entsprechend breiten Kreisbahn auf.

Aus Vorstehendem geht hervor, daß in Abweichung von den Ausführungsbeispielen auch mehr als zwei oder drei Aufhackschuhe an den unteren Enden der Aufhackmesser befestigt werden können und zwar auch in unterschiedlichen Höhen. Ferner kann auch mehr als ein Zusatz-Aufhackmesser an jedem Haupt-Aufhackmesser angeordnet werden, wobei seine Form wiederum beliebig sein kann. Von Bedeutung ist jedoch, daß an der Verbindungsstelle dieser Arme mit dem jeweiligen Aufhackmesser keine « stauenden » Überstände vorhanden sind.

An jedem Arm 12 der Aufhackvorrichtung 11 werden vorzugsweise gleichartige Aufhackmesser befestigt, welche aber wiederum von Arm zu Arm in ihrer Form und Anordnung verschieden sein können. Bevorzugt werden ferner nicht nur die Aufhackmesser, sondern auch deren Aufhackschuhe von denen an einem anderen Arm 12 der Aufhackvorrichtung 11 radial versetzt angeordnet, um entsprechend viele unterschiedliche Schnittkreise im Treberkuchen zu erzeugen.

## Patentansprüche

1. Aufhackvorrichtung in Läuterbottichen zur Würzegewinnung bei der Biererzeugung mit an einer stehend angeordneten, motorisch angetriebenen Welle waagrecht befestigten Armen, die jeweils eine Reihe von Aufhackmessern tragen, an deren unteren Enden Aufhackschuhe befestigt sind, um den sich beim Abläutervorgang auf dem Sieb- oder Filterboden des Läuterbottichs ausbildenden Treberkuchen entlang unterschiedlicher Kreisbahnen aufzulockern, dadurch gekennzeichnet, daß am unteren Ende eines jeden Aufhackmessers (13) wenigstens zwei Aufhackschuhe (14) seitlich nebeneinander oder in Umlaufrichtung hintereinander angeordnet sind, so daß eine verstärkte Auflockerung des Treberkuchens durch die auf unterschiedlichen Kreisbahnen oder gleicher Kreisbahn umlaufenden Aufhackschuhe (14) eines jeden Messers (13) erzeugt wird.

2. Vorrichtung nach Anspruch 1, dadurch gekennzeichnet, daß die Aufhackschuhe (14) an jedem Messer (13) auf gleicher Höhe angeordnet sind.

3. Vorrichtung nach Anspruch 1, dadurch gekennzeichnet, daß die Aufhackschuhe (14) an jedem Messer (13) auf unterschiedlicher Höhe befestigt sind.

4. Vorrichtung nach einem der Ansprüche 1-3, dadurch gekennzeichnet, daß am unteren Ende bzw. an einem unteren Teil der Aufhackmesser (13) mindestens ein als Zusatz-Aufhackmesser ausgebildeter Arm (23, 27, 30, 31) befestigt ist, der wenigstens einen Aufhackschuh (14) trägt.

5. Vorrichtung nach Anspruch 4, dadurch gekennzeichnet, daß der als Zusatz-Aufhackmesser ausgebildete Arm (23) am hinteren (nachlaufenden) Rand des Aufhackmessers (13 B) innerhalb von dessen Materialstärke befestigt ist.

6. Vorrichtung nach den Ansprüchen 4 und 5 mit Aufhackmessern, die einen gewellten Abschnitt aufweisen, dadurch gekennzeichnet, daß der gewellte Messerabschnitt (20) einen vertikalen Abschnitt (21) enthält, an dessen hinteren (nachlaufenden) Rand (22) das Zusatz-Aufhackmesser (23) nach unten verlaufend befestigt ist, welches an seinem freien Ende mindestens einen Aufhackschuh (14) trägt.

7. Vorrichtung nach Anspruch 4, dadurch gekennzeichnet, daß das Zusatz-Aufhackmesser (30) an einem schrägen unteren Endabschnitt (29) des Aufhackmessers (13 D) in entgegengesetzter Richtung zu diesem seitlich abstehend befestigt ist.

8. Vorrichtung nach Anspruch 1 oder 4, dadurch gekennzeichnet, daß die Aufhackschuhe (14) am unteren Ende eines jeden Aufhackmessers (13 A) und/oder Zusatz-Aufhackmessers seitlich unmittelbar aneinander angeschlossen sind.

9. Vorrichtung nach Anspruch 1 oder 4, dadurch gekennzeichnet, daß an einem senkrechten Endabschnitt (26) des Aufhackmessers (13 C, 13 A) ein Arm (27, 31) waagrecht befestigt ist, der mehrere Aufhackschuhe (14) trägt.

## Claims

1. A breaking-up device in clarifying vats for the production of wort in the brewing of beer, comprising arms which are fixed horizontally to an upstanding, motor-driven shaft and which each carry a series of breaking-up blades, to the lower ends of which breaking-up shoes are secured, in order to loosen up along different circular paths the draff cake which is formed in the clarifying operation on the sieve or filter bottom of the clarifying vat, characterised in that at least two breaking-up shoes (14) are arranged at the lower end of each breaking-up blade (13) in laterally juxtaposed relationship or in succession in the circumferential direction, so as to produce an increased loosening effect for the draff cake by the breaking-up shoes (14) of each blade (13), the shoes rotating on different circular paths or the same circular path.

2. A device according to claim 1 characterised in that the breaking-up shoes (14) are arranged on each blade (13) at the same level.

3. A device according to claim 1 characterised in that the breaking-up shoes (14) are secured to each blade (13) at different levels.

4. A device according to one of claims 1 to 3 characterised in that secured to the lower end or to a lower portion of the breaking-up blades (13) is at least one arm (23, 27, 30, 31) which is in the form of an additional breaking-up blade and which carries at least one breaking-up shoe (14).

5. A device according to claim 4 characterised in that the arm (23) which is in the form of an additional breaking-up blade is fixed to the rear (trailing) edge of the breaking-up blade (13B) within the thickness of material thereof.

6. A device according to claims 4 and 5 with breaking-up blades which have a corrugated portion characterised in that the corrugated blade portion (20) includes a vertical portion (21), to the rear (trailing) edge (22) of which the additional breaking-up blade (23) is secured, in such a way as to extend downwardly, the additional breaking-up blade (23) carrying at least one breaking-up shoe (14) at its free end.

7. A device according to claim 4 characterised in that the additional breaking-up blade (30) is fixed to an inclined lower end portion (29) of the breaking-up blade (13D), projecting laterally in the opposite direction with respect thereto.

8. A device according to claim 1 or claim 4 characterised in that the breaking-up shoes (14) are laterally directly connected to each other at the lower end of each breaking-up blade (13A) and/or additional breaking-up blade.

9. A device according to claim 1 or claim 4 characterised in that horizontally secured to a vertical end portion (26) of the breaking-up blade (13C, 13A) is an arm (27, 31) which carries a plurality of breaking-up shoes (14).

## Revendications

1. Dispositif de piochage de cuves de clarification pour l'obtention du moût lors de la production de bière, comportant des bras fixés horizontalement à un arbre entraîné par un moteur disposé verticalement, lesquels portent chacun une rangée de couteaux de piochage, aux extrémités inférieures desquelles sont fixés des sabots de piochage en vue de désagréger, le long de pistes circulaires différentes, les tourteaux de drêches qui se forment au cours de l'opération de clarification sur le fond de tamisage ou de filtrage de la cuve de clarification, caractérisé par le fait qu'à l'extrémité inférieure de chacun des couteaux (13) de piochage sont disposés au moins deux sabots (14) de piochage latéralement l'un à côté de l'autre ou l'un derrière l'autre dans le sens de la rotation, si bien qu'une désagrégation renforcée du tourteau de drêches se produit grâce aux sabots (14) de piochage tournant sur des pistes circulaires différentes, ou sur la même piste circulaire, de chacun des couteaux (13).

2. Dispositif selon la revendication 1, caractérisé par le fait que les sabots (14) de piochage sont situés à la même hauteur sur chaque couteau (13).

3. Dispositif selon la revendication 1, caractérisé par le fait que les sabots (14) de piochage sont disposés à des hauteurs différentes sur chaque couteau (13).

4. Dispositif selon une des revendications 1 à 3, caractérisé par le fait qu'à l'extrémité inférieure, ou sur une partie inférieure des couteaux (13) de piochage, au moins un bras (23, 27, 30, 31) portant au moins un sabot (14) de piochage, est fixé en tant que couteau de piochage supplémentaire.

5. Dispositif selon la revendication 4, caractérisé par le fait que le bras (23) conformé en couteau de piochage supplémentaire est fixé au bord arrière (postérieur) du couteau (13B) de piochage dans l'épaisseur du matériau de celui-ci.

6. Dispositif selon les revendications 4 et 5 comportant des couteaux de piochage présentant une partie ondulée, caractérisé par le fait que la partie de couteau ondulée (20) comporte une partie centrale (21) au bord arrière (postérieur) (22) de laquelle est fixé vers le bas le couteau (23) de piochage supplémentaire, lequel porte à son extrémité libre au moins un couteau (14) de piochage.

7. Dispositif selon la revendication 4, caractérisé en ce que le couteau (30) de piochage supplémentaire est fixé à une partie d'extrémité inférieure oblique (29) du couteau (13D) de piochage, en s'écartant latéralement dans la direction opposée à celui-ci.

8. Dispositif selon la revendication 1 ou 4, caractérisé par le fait que les sabots (14) de piochage sont raccordés à l'extrémité inférieure de chacun des couteaux (13A) de piochage et/ou du couteau de piochage supplémentaire, latéralement immédiatement l'un à côté de l'autre.

9. Dispositif selon la revendication 1 ou 4, caractérisé par le fait qu'à une partie d'extrémité verticale (26) du couteau (13C, 13A) de piochage est fixé horizontalement un bras (27, 31) qui porte plusieurs sabots (14) de piochage.

*Fig. 1*

EP 0 212 179 B1

_Fig. 2_    12    _Fig. 3_

13B

20

22    21
23    24
15    25
      15
14    14

_Fig. 4_    _Fig. 5_

23
14    18    18
19
14
18    18
19    23

23    14
13B    25

2

_Fig. 6_

13C

20

26

VII

14    27    14

_Fig. 7_

28    26

_Fig. 8_

13A

IX    IX

31

14

_Fig. 9_

14

13A

14    14

32    31

_Fig. 10_

13D

20

XI    XI

30    29

14

_Fig. 11_

30    29

_Fig. 12_

13A

XIII    XIII

14

_Fig. 13_

13A

3